# EUROPÄISCHE PATENTSCHRIFT

(11) **EP 3 754 544 B1**
(45) Veröffentlichungstag und Bekanntmachung des Hinweises auf die Patenterteilung: **11.11.2026**
(21) Anmeldenummer: 20176975.9
(22) Anmeldetag: 28.05.2020
(51) Int. Cl.: G06V 20/64, G06T 7/00, G06T 7/73, G06V 10/26, G06V 10/774

(54) **ARBEITS- UND TRAININGSVERFAHREN ZUM BESTIMMEN EINES BAUTEILS EINER BAUTEILANORDNUNG**
WORK AND TRAINING PROCEDURES FOR DETERMINING A COMPONENT OF A COMPONENT ARRANGEMENT
PROCÉDURES DE TRAVAIL ET DE FORMATION POUR LA DÉTERMINATION D'UN ÉLÉMENT D'UN ORGANIGRAMME DE COMPOSANTS

(30) Priorität: 18.06.2019 DE 102019208864
(43) Veröffentlichungstag der Anmeldung: 23.12.2020
(73) Patentinhaber: Siemens Mobility GmbH, 80997 München (DE)
(72) Erfinder: Kluckner, Stefan, 12487 Berlin (DE)
(74) Vertreter: Siemens Patent Attorneys

(56) Entgegenhaltungen:
- WO-A1-2019/013736
- US-A1- 2013 051 647
- ARUL SELVAM PERIYASAMY ET AL: "Robust 6D Object Pose Estimation in Cluttered Scenes using Semantic Segmentation and Pose Regression Networks", ARXIV.ORG, CORNELL UNIVERSITY LIBRARY, 201 OLIN LIBRARY CORNELL UNIVERSITY ITHACA, NY 14853, 8 October 2018 (2018-10-08), XP081058672

## Beschreibung

Die vorliegende Erfindung betrifft ein Arbeitsverfahren für ein Erkennungssystem mit einem Trainingsverfahren zum Erzeugen eines 3D-Modells einer Bauteilanordnung mit Referenzdaten.

Technische Produkte wie beispielsweise Schienenfahrzeuge, Fahrzeuge, Flugzeuge, Schiffe, sonstige Maschinen, etc., bestehen oftmals aus einer Vielzahl von Bauteilen. Beispielsweise bei einer Wartung eines derartigen Produkts müssen einzelne dieser Bauteile erkannt werden, um zum Beispiel Ersatzteile nachbestellen zu können. Aufgrund der hohen Anzahl an verschiedenen und häufig doch ähnlichen Bauteilen ist eine zuverlässige, maschinelle Erkennung einzelner Bauteile erstrebenswert.

Aus der DE 102017217063 A1 ist ein Erkennungssystem zum maschinellen Erkennen von Bauteilen einer Bauteilanordnung bekannt. Zum Erkennen der Bauteile wird unter anderem ein Timeof-Flight Sensor verwendet.

Die WO 2019/013736 A1 betrifft ein gattungsgemäßes Arbeitsverfahren zur Bauteilerkennung gemäß dem Oberbegriff des unabhängigen Patentanspruchs.

Aus US 2013/051647 A1 ist ein Verfahren zur Registrierung von 2D-Bilddaten mit 3D-Modelldaten bekannt, welches einen Schritt der Bildsegmentierung beinhaltet. Der Aufsatz mit dem Titel "Robust 6D Object Pose Estimation in Cluttered Scenes using Semantic Segmentation and Pose Regression Networks" von Arul Selvam Periyasamy et al offenbart ein Trainingsverfahren für einen semantischen Segmentierungsalgorithmus.

Eine Aufgabe der vorliegenden Erfindung ist es, ein Arbeitsverfahren für ein Erkennungssystem mit einem Trainingsverfahren zum Erzeugen eines 3D-Modells mit Referenzdaten zu beschreiben, welche eine kostengünstige und zuverlässige Bestimmung eines Bauteils einer Bauteilanordnung ermöglichen.

Erfindungsgemäß wird die oben genannte Aufgabe durch ein Arbeits- und Trainingsverfahren gemäß dem unabhängigen Patentanspruch 1 gelöst.

Vorteilhaft hierbei ist es, dass ein Ermitteln von Bauteilinformationen bezüglich zu bestimmender Bauteile der Bauteilanordnung lediglich durch Aufnahme eines Farbbildes des ersten Teils der Bauteilanordnung, in dem sich das zu bestimmende Bauteil befindet, und einen Abgleich dieses Farbbildes mit gespeicherten Informationen möglich ist. Für die Aufnahme des Farbbildes können gewöhnliche Aufnahmegeräte mit RGB-Sensoren, wie sie beispielsweise in Mobiltelefonen und Tablet-Computern heutzutage fast standardmäßig verbaut sind, verwendet werden. Es sind keine aufwendigen Sensoren, beispielsweise 3D Structured Light oder Time Of Flight (TOF) Sensoren notwendig. Alternativ oder zusätzlich können bei dem Farbbild auch Infrarot- oder Ultraviolettspektrum berücksichtigt werden.

Die erste und die zweite Poseinformation sind jeweils durch sechs Freiheitsgrade bestimmt. Diese sechs Freiheitsgrade sind jeweils drei Translationsfreiheitsgrade und drei Rotationsfreiheitsgrade, sodass sowohl eine Lokalisierung als auch eine Blickwinkelausrichtung im dreidimensionalen Raum festgelegt ist.

In wenigstens einer Ausgestaltung sind semantische Klassen der ersten bzw. zweiten semantischen Information Bauteilklassen des 3D-Modells der Bauteilanordnung zugeordnet.

Bei den Bauteilklassen handelt es sich um funktional gruppierte Bauteile. Beispielsweise bei einem Schienenfahrzeug sind folgende Bauteilklassen möglich: "Glaskörper", "Innenausbau", "Fahrwerk", "Türanlage", "Klimaanlage", etc.

Ein Vorteil hierbei ist es, dass keine zu große Anzahl von Klassen der semantischen Information vorhanden sind, sodass ein Erzeugen und Trainieren eines semantischen Segmentierungsalgorithmus für den Abgleich der ersten mit der zweiten semantischen Information, sowie ein Durchführen dieses Abgleichs, mit einem angemessenen Aufwand betreibbar sind. Alternativ sind jedoch selbstverständlich auch Klassen für die semantische Information verwendbar, die eine detailliertere Unterteilung der Bauteiltypen berücksichtigen oder umgekehrt.

In wenigstens einer Ausgestaltung stellt die erste bzw. zweite semantische Information jeweils ein Histogramm der in dem entsprechenden Farbbild bzw. simulierten Ansicht enthaltenen Bauteilklassen des 3D-Modells dar.

Das Histogramm ist eine Häufigkeitsverteilung der Klassen der jeweiligen semantischen Information bezüglich des Farbbildes oder einer simulierten Ansicht. D.h. in dem Histogramm ist gespeichert, wie häufig eine bestimmte Klasse jeweils in dem Farbbild bzw. der simulierten Ansicht vorhanden ist. Beispielsweise wird diese Information für jeden einzelnen Pixel des Farbbildes bzw. der simulierten Ansicht ausgewertet. Alternativ können auch mehrere Pixel zusammengefasst ausgewertet werden, was zwar ein ungenaueres Ergebnis, aber eine schnellere Verarbeitung der Bilder ermöglicht.

Ein Vorteil einer solchen Ausgestaltung ist es, dass die zweite semantische Information, welche mit Bezug zu dem 3D-Modell der Bauteilanordnung gespeichert wird, lediglich in Form eines Histogramms gespeichert wird, was einen geringen Speicherbedarf der zweiten semantischen Information zur Folge hat. Alternativ können auch komplexere Methoden verwendet werden, wie zum Beispiel ein Lernen eine Metrik über semantische Bilder, wodurch eine bessere Bezugnahme auf die Charakteristiken der Szenen erreicht werden kann.

In wenigstens einer Ausgestaltung umfasst der Schritt des Ermittelns der wenigstens einen Bauteilinformation die folgenden weiteren Schritte:
- Rendern eines Bildausschnitts des 3D-Modells basierend auf der ersten Poseinformation; und
- Anzeigen des gerenderten Bildausschnitts auf einer Anzeigevorrichtung zusammen mit der wenigstens einen Bauteilinformation des wenigstens einen zu erkennenden Bauteils.

Vorteilhaft hierbei ist es, dass einem Benutzer unmittelbar Daten des zu erkennenden Bauteils angezeigt werden können, basierend auf denen der Benutzer das Bauteil beispielsweise nachbestellen kann. Die Bauteilinformation wird beispielsweise aus in dem 3D-Modell gespeicherten Zusatzdaten gewonnen. Die Bauteilinformationen umfassen beispielsweise Seriennummern oder Bestellnummern von Bauteilen, einen Link, der zu einer Bestellwebsite führt, oder sonstige Spezifikationen und Metadaten der Bauteile.

Ein Erkennungssystem umfasst ein Aufnahmegerät und eine Datenverarbeitungsvorrichtung. Das Aufnahmegerät ist dazu eingerichtet, wenigstens ein Farbbild eines ersten Teils einer Bauteilanordnung aufzunehmen, wobei der erste Teil der Bauteilanordnung wenigstens ein zu erkennendes Bauteil umfasst. Die Datenverarbeitungsvorrichtung ist dazu eingerichtet, eine erste semantische Information eines Bildinhalts des Farbbildes zu bestimmen. Die Datenverarbeitungsvorrichtung ist ferner dazu eingerichtet, die erste semantische Information mit wenigstens einer gespeicherten zweiten semantischen Information eines Bildinhalts wenigstens einer simulierten Ansicht des 3D-Modells abzugleichen. Die Datenverarbeitungsvorrichtung ist ferner dazu eingerichtet, eine erste Poseinformation des Aufnahmegeräts bezüglich des 3D-Modells basierend auf einer Auswertung einer gespeicherten zweiten Poseinformation der zweiten semantischen Information, welche eine größte Ähnlichkeit zu der ersten semantischen Information aufweist, zu bestimmen. Die Datenverarbeitungsvorrichtung ist ferner dazu eingerichtet, wenigstens eine Bauteilinformation des wenigstens einen zu erkennenden Bauteils basierend auf der bestimmten ersten Poseinformation zu ermitteln.

Das Erkennungssystem eignet sich insbesondere dazu, das Arbeitsverfahren auszuführen.

Das Aufnahmegerät und die Datenverarbeitungsvorrichtung können in einer Einheit, oder in getrennten, beispielsweise über ein Netzwerk verbundenen Einheiten, implementiert sein. Sind Aufnahmegerät und Datenverarbeitungsvorrichtung in einer Einheit integriert, so handelt es sich bei dem Erkennungssystem beispielsweise um ein Mobiltelefon oder Tablet-Computer, auf dem das abstrahierte 3D-Modell mit den entsprechenden Informationen gespeichert ist. Das Aufnahmegerät ist beispielsweise eine RGB-Kamera.

Sind Aufnahmegerät und Datenverarbeitungsvorrichtung in getrennten Einheiten implementiert, so kann als Aufnahmegerät beispielsweise ein beliebiges Mobiltelefon oder Tablet-Computer mit RGB-Kamera verwendet werden. Das 3D-Modell mit den entsprechenden gespeicherten Informationen ist beispielsweise auf einem Desktop-Computer oder einem Server gespeichert, der mit dem Aufnahmegerät über ein Local Area Network (LAN), Wide Area Network (WAN), das Internet oder ein sonstiges Netzwerk verbunden ist.

In wenigstens einer Ausgestaltung umfasst das Erkennungssystem ferner eine Anzeigevorrichtung. Die Datenverarbeitungsvorrichtung ist dazu eingerichtet, einen Bildausschnitt des 3D-Modells basierend auf der ersten Poseinformation zu rendern. Die Anzeigevorrichtung ist dazu eingerichtet, den gerenderten Bildausschnitt zusammen mit der wenigstens einen Bauteilinformation des wenigstens einen zu erkennenden Bauteils anzuzeigen.

Sonstige Ausgestaltungen und Vorteile des Erkennungssystems entsprechen im Wesentlichen denen des Arbeitsverfahrens.

Das Trainingsverfahren zum Erzeugen des 3D-Modells der Bauteilanordnung mit Referenzdaten für das Arbeitsverfahren umfasst die folgenden Schritte:
- Aufnehmen wenigstens eines Trainingsbildes wenigstens eines dritten Teils der Bauteilanordnung;
- Erfassen einer Aufnahmeposition für jedes aufgenommene Trainingsbild;
- Registrieren des wenigstens einen Trainingsbildes in dem 3D-Modell basierend auf der entsprechenden erfassten Aufnahmeposition;
- Erstellen einer semantischen Labelmap für jedes aufgenommene Trainingsbild;
- Trainieren eines semantischen Segmentierungsalgorithmus basierend auf dem wenigstens einen Trainingsbild und der entsprechenden wenigstens einen semantischen Labelmap;
- Erstellen wenigstens einer simulierten Ansicht wenigstens eines zweiten Teils der Bauteilanordnung;
- Speichern einer zweiten semantischen Information der wenigstens einen simulierten Ansicht zusammen mit einer zugehörenden zweiten Poseinformation bezüglich dem 3-D Modell.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
in den Figuren zeigt:
- Figur 1: eine Darstellung eines 3D-Modells einer Bauteilanordnung,
- Figur 2: ein Flussdiagramm eines Arbeitsverfahrens für ein Erkennungssystem gemäß einer Ausgestaltung der Erfindung,
- Figur 3: ein Flussdiagramm eines Trainingsverfahrens für ein Erkennungssystem zum Erzeugen eines 3D-Modells einer Bauteilanordnung mit Referenzdaten gemäß einem Ausführungsbeispiel der Erfindung,
- Figur 4: eine schematische Darstellung eines Erkennungssystems gemäß einem Ausführungsbeispiel der Erfindung, und
- Figur 5: schematische Darstellung eines Arbeitsverfahrens für ein Erkennungssystem und eines Trainingsverfahrens für ein Erkennungssystem zum Erzeugen eines 3D-Modells einer Bauteilanordnung mit Referenzdaten gemäß einem Ausführungsbeispiel der Erfindung.

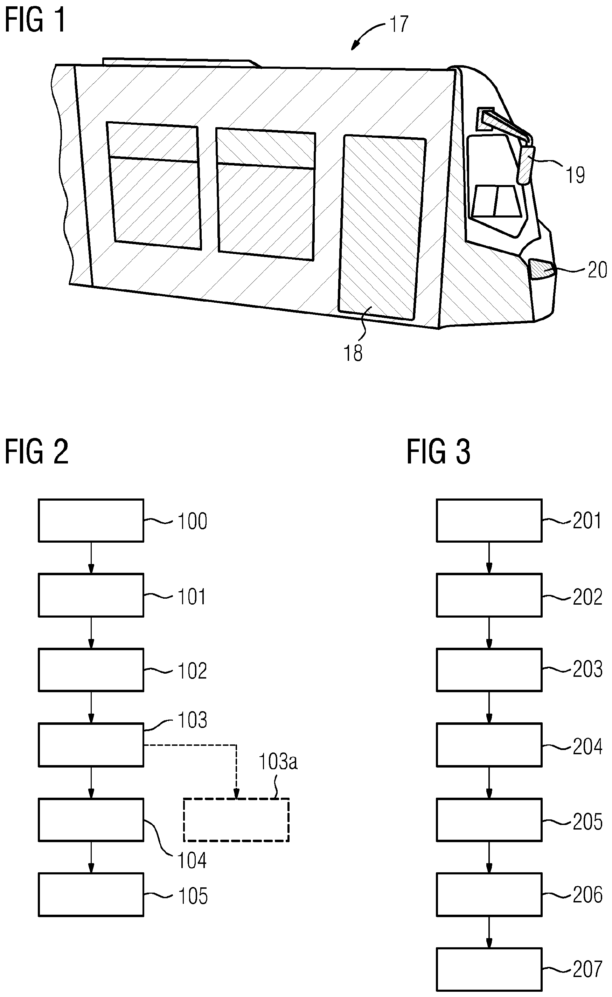

Figur 1 zeigt eine Darstellung eines 3D-Modells einer Bauteilanordnung 17. Die Bauteilanordnung 17 ist in diesem Ausführungsbeispiel ein vorderer Teil eines Schienenfahrzeugs.

Die Bauteilanordnung 17 umfasst mehrere Bauteile. Hier sichtbare Bauteile sind beispielsweise ein Türblatt 18, ein Außenspiegel 19, ein Scheinwerfer 20, etc. Die hier gezeigte Darstellung der Bauteilanordnung 17 ist ein Rendering des 3D-Modells mit unterschiedlicher Farbgebung. Die unterschiedlichen Farben repräsentieren unterschiedliche Bauteilklassen.

Figur 2 zeigt ein Flussdiagramm eines Arbeitsverfahrens für ein Erkennungssystem gemäß einem Ausführungsbeispiel der Erfindung.

In einem Schritt 100 wird von einem Benutzer mit einem Aufnahmegerät zunächst ein Farbbild einer Bauteilanordnung aufgenommen. Die Bauteilanordnung umfasst eine Mehrzahl von Bauteilen, von denen Bauteilinformationen, wie beispielsweise Typennummern, Bestellnummern, oder ähnliche, gewonnen werden sollen. Die Bauteilanordnung ist beispielsweise Teil eines Schienenfahrzeugs, eines Flugzeugs, eines Schiffs, oder eines sonstigen technischen Produkts. Die Bauteilanordnung entspricht beispielsweise der Bauteilanordnung gemäß Figur 1.

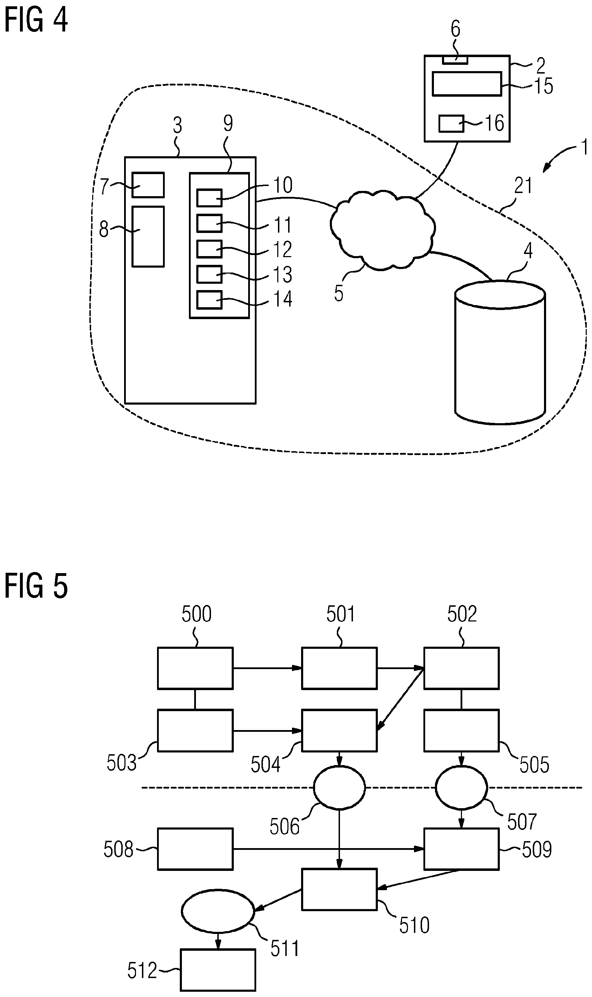

Das aufgenommene Farbbild zeigt einen ersten Bildausschnitt der Bauteilanordnung. Der erste Bildausschnitt zeigt zumindest teilweise ein oder mehrere Bauteile, die erkannt werden sollen, um zumindest eine der oben genannten Bauteilinformationen dem Benutzer zur Verfügung zu stellen. Dies ist beispielsweise notwendig, wenn ein entsprechendes Ersatzteil nachbestellt werden soll. Wenn das oder die Bauteile, die erkannt werden sollen, beispielsweise zwischen anderen Bauteilen eingebaut sind, so genügt es, wenn das Farbbild beispielsweise nur eine sichtbare Oberfläche des oder der zu erkennenden Bauteile zeigt. Das Aufnahmegerät wird genauer mit Bezug auf Figur 4 beschrieben.

In einem weiteren Schritt 101 wird eine erste semantische Information eines Bildinhalts des Farbbildes bestimmt. Die erste semantische Information stellt eine Zuordnung eines jeden Pixels des aufgenommenen Farbbildes zu einer semantischen Klasse dar. Die semantischen Klassen sind in dem hier gezeigten Beispiel Bauteilklassen, denen die Bauteile der Bauteilanordnung zugeordnet sind.

Bauteilklassen sind funktionale Gruppen, zu denen mehrere unterschiedliche Bauteile repräsentativ zusammengefasst sind. Beispiele für derartige Bauteilklassen sind in diesem Ausführungsbeispiel die Bauteilklassen: "Glaskörper", "Türanlage", "Fahrwerkselemente", "Innenausbau", "Wagenkasten", "Klimaanlage" etc. Die Bauteilklasse "Türanlage", beispielsweise, umfasst sämtliche Bauteile, die in einer Türanlage der Bauteilanordnung verbaut sind, wie zum Beispiel ein Türblatt, ein Türrahmen, ein Klemmschutz, eine Lichtschranke und sonstige Elektronik zur Steuerung einer Türanlage.

Die Zuordnung jedes Pixels des Farbbildes zu einer entsprechenden semantischen Klasse wird maschinell mittels einer semantischen Segmentierung durchgeführt. Eine semantische Segmentierung eines Bildes ist die automatisierte Clusterung eines Bildes, d.h. Zusammenfassen von Pixeln mit ähnlichen Pixelwerten, in diesem Fall Farbwerten, zu Bildsegmenten und Klassifikation der Bildsegmente in eine feste Anzahl von semantischen Klassen.

Bei der Bestimmung der ersten semantischen Information des Bildinhalts des aufgenommenen Farbbildes wird jeder Pixel des Farbbilds basierend auf einem Farbwert des Pixels, beispielsweise einem Vektor im RGB-Raum, einer speziellen semantischen Klasse zugeordnet. Die Zuweisung eines jeden Pixels zur entsprechenden semantischen Klasse basiert hierbei auf eine Wahrscheinlichkeitsanalyse, welcher Klasse der jeweilige Pixel am wahrscheinlichsten angehört. Diese Klasse wird dann als semantische Klasse des Pixels bestimmt.

Für die semantische Segmentierung des aufgenommenen Farbbildes wird ein entsprechend trainierter semantischer Segmentierungsalgorithmus verwendet. Ein Verfahren zum Erstellen eines solchen Segmentierungsalgorithmus, z.B. in Form eines Deep Learning Netzwerks, wird näher mit Bezug auf Figur 3 beschrieben.

In einem weiteren Schritt 102 wird die erste semantische Information mit einer gespeicherten zweiten semantischen Information einer Vielzahl simulierter Ansichten eines 3D-Modells der Bauteilanordnung abgeglichen. Das 3D-Modell ist beispielsweise ein CAD-Modell oder ähnliches Modell der Bauteilanordnung.

Die simulierten Ansichten des 3D-Modells werden beispielsweise so erzeugt, dass für jeden Teil der Bauteilanordnung ein simuliertes Bild aus allen, für einen Benutzer möglichen Blickwinkeln erzeugt wird. Schritte für diese Blickwinkel sind in diesem Ausführungsbeispiel quantisiert, beispielsweise in 5° Schritten, um eine überschaubare Anzahl an simulierten Bildern zu erhalten. Das Erzeugen der zweiten semantischen Information und der simulierten Bilder wird ebenfalls genauer mit Bezug auf Figur 3 beschrieben.

Die erste semantische Information und die zweite semantische Information werden in dem hier gezeigten Ausführungsbeispiel anhand von Histogrammen der semantischen Informationen verglichen. Für jede simulierte Ansicht des 3D-Modells liegt ein solches Histogramm vor. Dies hat zudem den Vorteil, dass lediglich die Histogramme der semantischen Information der simulierten Ansichten abgespeichert vorliegen müssen. Dies hat eine erheblich geringere Datenmenge an gespeicherten Daten zur Folge, als wenn alle simulierten Bilder abgespeichert wären. Die erste semantische Information des Bildinhalts des aufgenommenen Farbbildes liegt ebenfalls in einem solchen Histogramm vor.

Die Histogramme stellen Häufigkeitsverteilungen der semantischen Klassen der jeweiligen Bilder dar. Ein Histogramm eines entsprechenden Bildes sagt beispielsweise aus, dass die semantische Klasse "A" insgesamt 40% des Bildinhalts und die semantischen Klasse "B" insgesamt 60% des Bildinhalts des entsprechenden Bildes ausmacht. Anstelle prozentualer Angaben in dem Histogramm ist es auch möglich, absolute Werte von zugewiesenen Pixeln für jede semantische Klasse in den Histogrammen anzugeben.

In einem weiteren Schritt 103 wird die zweite semantische Information der gespeicherten zweiten semantischen Informationen der simulierten Bilder des 3D-Modells bestimmt, die eine größte Ähnlichkeit zur ersten semantischen Information aufweist. Das heißt, es wird das Histogramm der ersten semantischen Information des aufgenommenen Farbbildes mit den gespeicherten Histogrammen der zweiten semantischen Informationen verglichen und das gespeicherte Histogramm der zweiten semantischen Information bestimmt, welches die größte Ähnlichkeit zu dem Histogramm der ersten semantischen Information aufweist. Auf diese Weise wird bestimmt, welches simulierte Bild zu dem aufgenommenen Farbbild identisch ist oder diesem zumindest am ähnlichsten ist.

Hierbei kann in einem optionalen Schritt 103a ein Grenzwert für eine Ähnlichkeit zwischen der ersten und den zweiten semantischen Informationen berücksichtigt werden. Der Wert der Ähnlichkeit gibt an, zu welchem Grad die semantischen Informationen übereinstimmen. Dieser Wert ist also auch ein Hinweis darauf, wie ähnlich das aufgenommene Farbbild und eine entsprechende simulierte Ansicht sind. Liegt dieser Wert bei 100%, so sind erste und zweite semantische Information identisch. Liegt dieser Wert beispielsweise bei 50%, so stimmen 50% der Klassen der ersten semantischen Information mit Klassen der zweiten semantischen Information überein, die restlichen 50% sind jedoch verschieden. Bei einem Ähnlichkeitswert von 0% sind alle Klassen der ersten semantischen Information unterschiedlich von den Klassen der zweiten semantischen Information. In diesem Fall wäre kein Bauteil in dem Farbbild einer Klasse der Bauteile in dem simulierten Bild zuordbar.

Liegt für das zu dem aufgenommenen Farbbild identische oder ähnlichste simulierte Bild der Wert der Ähnlichkeit zwischen erster und zweiter semantischer Information unter diesem Grenzwert, so kann ein Warnsignal generiert werden, welches angibt, dass eine Bestimmung eines zu dem Farbbild passenden simulierten Bildes nicht oder nur unzureichend möglich ist. Mit dem Warnsignal ist es möglich, einem Benutzer mitzuteilen, wenn ein zu bestimmendes Bauteil mit einer nur unzureichenden Wahrscheinlichkeit, dass es sich um das richtige Bauteil handelt, bestimmt werden kann, oder dass eine Bestimmung gänzlich unmöglich ist, da keine hinreichende oder überhaupt keine Posebestimmung des Aufnahmegeräts möglich ist. Ein solcher Fall kann beispielsweise bei einer Abnutzung oder Verschmutzung von zu bestimmenden Bauteilen vorliegen, oder wenn zu bestimmende Bauteile in einer anderen Konfiguration als im 3D-Modell abgebildet (z.B. Türe offen/Türe zu), in der mit dem Farbbild aufgenommenen Szene erfasst sind. Somit ist das erste Warnsignal auch ein Hinweis für den Benutzer, dass er gegebenenfalls eine Bauteilbestimmung durch Reinigung oder Anpassung der Konfiguration (z.B. Türe öffnen/schließen) ermöglichen kann.

Optional kann das Verfahren zur Bauteilerkennung für den Fall, dass dieser Grenzwert unterschritten wird, an dieser Stelle abgebrochen werden.

In einem weiteren Schritt 104 wird eine erste Poseinformation des Aufnahmegeräts basierend auf einer Auswertung einer gespeicherten zweiten Poseinformation des bestimmten simulierten Bildes bezüglich des 3D-Modells bestimmt.

Für jedes gespeicherte Histogramm der zweiten semantischen Information für jedes simulierte Bild ist, zusammen mit jedem gespeicherten Histogramm, eine zweite Poseinformation gespeichert. Die gespeicherten Daten umfassen hier also nicht die simulierten Bilder selbst, sondern zu jedem simulierten Bild ein entsprechendes Histogramm und jedem Histogramm zugeordnet eine zweite Poseinformation. Diese zweite Poseinformation gibt jeweils sechs Freiheitsgrade bezüglich des 3D-Modells an, die ein Gerät zur Aufnahme des entsprechenden simulierten Bildes gehabt hätte. Es handelt sich somit quasi um eine fiktive Pose des jeweiligen simulierten Bildes.

In dem hier gezeigten Ausführungsbeispielen wird die gespeicherte zweite Poseinformation des bestimmten, ähnlichsten simulierten Bildes als Poseinformation des Aufnahmegeräts übernommen. Das heißt, da das bestimmte simulierte Bild und das aufgenommene Farbbild bezüglich ihrer semantischen Informationen identisch oder hochgradig ähnlich sind, wird von der gespeicherten fiktiven zweiten Poseinformation auf die Pose des Aufnahmegeräts relativ zu dem 3D-Modell, d.h. in Koordinaten eines Koordinatensystems des 3D-Modells, geschlossen.

In einem letzten Schritt 105 wird anschließend wenigstens eine Bauteilinformation des wenigstens einen zu erkennenden Bauteils, welches mit dem Farbbild aufgenommen wurde, basierend auf der bestimmten ersten Poseinformation ausgewertet. Hierzu wird im vorliegenden Ausführungsbeispiel ausgehend von der bestimmten ersten Poseinformation das 3D-Modell mit codierter Bauteilinformation des wenigstens einen zu erkennenden Bauteils gerendert. Auf diese Weise wird eine Ansicht des 3D-Modells erzeugt, aus der direkt die Bauteilinformationen der in der gerenderten Ansicht gezeigten Bauteile abgerufen werden können.

Die gerenderte Ansicht des 3D-Modells stellt dann, wenn das obige Verfahren erfolgreich durchgeführt wurde, zumindest mit hoher Übereinstimmung den Bildinhalt des aufgenommenen Farbbildes dar. Die gerenderte Ansicht kann beispielsweise direkt dem Benutzer mit den Bauteilinformationen angezeigt werden, die gerenderte Ansicht kann mit dem aufgenommenen Farbbild überlagert werden, oder es können auch die ausgewerteten Bauteilinformationen direkt in dem aufgenommenen Farbbild angezeigt werden. Auf diese Weise kann ein Benutzer des obigen Verfahrens mit einem handelsüblichen, herkömmlichen Mobiltelefon, Tablet-Computer, oder sonstigem Aufnahmegerät ein Farbfoto eines zu erkennenden Bauteils aufnehmen und sich Bauteilinformationen in dem aufgenommenen Farbfoto oder einem entsprechenden gerenderten Bild des 3D-Modells anzeigen lassen. Mit dem hier beschriebenen Verfahren werden keine aufwändigen Geräte mit 3D Sensoren o.ä. zur Bauteilerkennung benötigt.

Figur 3 zeigt ein Flussdiagramm eines Trainingsverfahrens zum Erzeugen eines 3D-Modells einer Bauteilanordnung mit Referenzdaten für ein Erkennungssystem. Beispielsweise kann dieses Trainingsverfahren für ein Erkennungssystem, wie es mit Bezug auf Figur 4 beschrieben ist, verwendet werden. Beispielsweise kann das Trainingsverfahren verwendet werden, ein 3D-Modell einer Bauteilanordnung mit Referenzdaten, wie es in dem Arbeitsverfahren gemäß Figur 2 verwendet wird, zu erzeugen. Die Bauteilanordnung entspricht beispielsweise der Bauteilanordnung 17 gemäß Figur 1.

Ein Ziel des Trainingsverfahren ist es, einen semantischen Segmentierungsalgorithmus, wie er mit Bezug auf Figur 2 erwähnt ist, zu generieren und zu trainieren, und ein 3D-Modell einer Bauteilanordnung derart mit Referenzdaten zu versehen, dass eine zuverlässige Bauteilerkennung, wie sie gemäß Figur 2 beschrieben ist, durchgeführt werden kann. Die Referenzdaten sind insbesondere die oben erwähnten gespeicherten zweiten semantischen Informationen, sowie die entsprechenden zweiten Poseinformationen.

In einem ersten Schritt 201 wird ein 3D-Modell, beispielsweise ein CAD-Modell oder ähnliches Modell, einer Bauteilanordnung aufbereitet. Alle Bauteile der Bauteilanordnung werden spezifischen Bauteilklassen zugeordnet. Gewöhnlich wird diese Zuordnung jedoch bereits bei einer Erzeugung des 3D-Modells vorgenommen, sodass in einem solchen Fall keine zusätzliche Zuordnung notwendig ist. Insbesondere bei CAD-Modellen ist eine solche Zuordnung bereits bei der Erzeugung vorgesehen, sodass bei der Verwendung eines solchen Modells kein zusätzlicher Aufwand zur Aufbereitung des Modells entsteht.

Ferner werden bei der Aufbereitung des 3D-Modells die Bauteile entsprechend ihren Bauteilklassen eingefärbt. Jeder Bauteilklasse in dem 3D-Modell ist dann eine spezifische Farbe zugewiesen. Dies dient der einfacheren Auswertung der zweiten semantischen Information, kann aber ebenfalls bereits bei einer Erzeugung des 3D-Modells berücksichtigt werden.

Des Weiteren können bei der Aufbereitung des 3D-Modells die Modelldaten bereinigt werden. Dies bedeutet, dass beispielsweise bewegliche Elemente in dem 3D-Modell, die in unterschiedlichen Zuständen in dem Modell hinterlegt sind, auf einen Zustand in dem Modell reduziert werden. Vorteilhaft hierbei ist es, eine Reduzierung auf einen Zustand, wie er üblicherweise in der realen Szene bei einer Wartung der Bauteilanordnung vorliegen würde, zu reduzieren. So werden beispielsweise Fenster eines Schienenfahrzeugs, die in dem 3D-Modell sowohl geöffnet als auch geschlossen dargestellt sind, auf den geschlossenen Zustand reduziert.

In einem zweiten Schritt 202 werden Trainingsbilder in dem 3D-Modell registriert. Die Trainingsbilder sind in diesem Ausführungsbeispiel Farbbilder, die beispielsweise mit gewöhnlichen Mobilgeräten oder Tablet-Computern aufgenommen werden können. Beim Aufnehmen jedes Trainingsbilds wird auch eine zugehörende Aufnahmeposition jeweils erfasst. Hierfür wird beispielsweise eine inertiale Messeinheit (engl.: inertial measurement unit, IMU) verwendet. Diese ist beispielsweise ebenfalls in dem Aufnahmegerät integriert, sodass jedes aufgenommene Trainingsbild mit der zugehörenden Aufnahmeposition verknüpft wird. Beispielsweise eignen sich hierfür Tools für visuelle Odometrie, beispielsweise implementiert mittels "Google Tango". Mit derartigen Tools wird dieser Schritt 202 automatisiert und für einen Benutzer ohne großen Aufwand durchgeführt. Die Trainingsbilder werden zusammen mit den jeweiligen Aufnahmepositionen lagerichtig, d.h. über Zuordnung wenigstens dreier Punktepaare, in dem 3D-Modell eingebracht.

Diese Trainingsbilder können mittels Datenargumentierung und/oder Simulation von beispielsweise Beleuchtungsunterschiede, Schattenwurf, unterschiedlichen Kameracharakteristiken eines Aufnahmegeräts der Trainingsbilder, oder ähnlichem überarbeitet werden. Auf diese Weise ist ein an reale Szenen besser angepasstes Ergebnis des Trainingsverfahrens erzielbar.

In einem weiteren Schritt 203 werden für jedes aufgenommene und in dem 3D-Modell registrierte Trainingsbild sogenannte semantische Labelmaps erstellt. Diese semantischen Labelmaps definieren für jeden Pixel eines jeden Trainingsbilds, zu welcher Bauteilklasse ein Bauteil der Bauteilanordnung, welches diesen Pixel umfasst, gehört. Eine semantische Information der semantischen Labelmaps wird aus dem 3D-Modell übernommen. Hierzu werden basierend auf den Aufnahmepositionen der Trainingsbilder entsprechende Ansichten des 3D-Modells gerendert. Da unterschiedliche Bauteilklassen in dem 3D-Modell durch eindeutige Farben repräsentiert sind, sind die gerenderten Bilder Ansichten des 3D-Modells, in dem jeder Pixel der gerenderten Ansicht eine für eine Bauteilklasse spezifische Farbe aufweist. Über die spezifischen Farben ist so jedem Pixel eine Bauteilklasse zugeordnet. Mit anderen Worten: die semantischen Labelmaps werden aus dem 3D-Modell mittels Rendering von Ansichten des 3D-Modells entsprechend den aufgenommenen Trainingsbildern generiert.

In einem weiteren Schritt 204 wird ein semantischer Segmentierungsalgorithmus basierend auf den Trainingsbildern und den entsprechenden semantischen Labelmaps trainiert. Hierfür werden tiefe künstliche neuronale Netze zum Trainieren eines solchen Algorithmus eingesetzt. Bei diesem Schritt wird dem semantischen Segmentierungsalgorithmus mittels eines Deep Learning Verfahrens beigebracht, Farbdaten von Farbbildern, wie beispielsweise den Trainingsbildern und später den aufgenommenen Farbbildern zur Bauteilerkennung, auf die entsprechenden semantischen Klassen, den sogenannten Labels, zuzuordnen. Ausgehend von den Farbdaten wird eine Mapping Funktion durch eine Deep Learning Architektur trainiert, die Farbwerte auf eine Objektklasse mappen kann. D.h. es wird ein Optimierungsproblem gelöst, das Farbdaten auf Objektklassen mappen kann, indem Farbdaten und die Ground Truth Daten (Maps) vorgelegt werden.

Hierbei ist es insbesondere möglich, vorhandene und vortrainierte semantische Segmentierungsalgorithmen zu verwenden. Beispielsweise sogenannten Fahrerassistenzsystemen (engl.: advanced driver assistance systems, ADAS) aus dem Bereich des autonomen Fahrens sind geeignet, hier verwendet zu werden. Diese semantischen Segmentierungsalgorithmen, deren semantische Klassen beispielsweise "Bäume", "Fußgänger", "Fahrzeuge", etc. zu erkennen trainiert sind, können an die hier verwendeten semantischen Klassen, d.h. die Bauteilklassen der Bauteilanordnung, angepasst werden. Dies ermöglicht einen wesentlich schnelleren Trainingsprozess des semantischen Segmentierungsalgorithmus für die hier verwendete Anwendung.

In einem weiteren Schritt 205 werden Blickwinkelsimulationen des 3D-Modells erzeugt. Hierzu werden simulierte Ansichten aller relevanten Teile des 3D-Modells erzeugt. Insbesondere werden von jedem relevanten Teil simulierte Bilder für jede mögliche Aufsicht auf die relevanten Teile erzeugt. Um eine unendliche Anzahl von Blickwinkelsimulationen zu vermeiden, werden die Blickwinkel quantisiert simuliert, d.h. es werden beispielsweise jeweils 5° Schritte der möglichen Blickwinkel simuliert. Selbstverständlich sind auch kleinere oder größere Quantisierungsschritte bei der Blickwinkelsimulation möglich.

Relevante Teile des 3D-Modells sind beispielsweise alle Teile des 3D-Modells, in denen sich Bauteile befinden, die gegebenenfalls bei einer Wartung ausgetauscht werden können. So können die simulierten Ansichten anhand einer Ersatzbauteilliste erzeugt werden, was einen übermäßigen Aufwand für irrelevante Teile des 3D-Modells verhindert. Es können also beispielsweise lediglich simulierte Ansichten erzeugt werden für Bereiche, in denen sich austauschbare Teile befinden.

Die simulierten Ansichten repräsentieren Blickwinkel, wie ein Benutzer die relevanten Teile beobachten könnte. Da für einen Abgleich eines aufgenommenen Farbbilds eines zu erkennenden Bauteils mit den simulierten Ansichten, wie oben mit Bezug auf Figur 2 beschrieben, lediglich semantische Informationen notwendig sind, werden zur Erzeugung der simulierten Ansichten lediglich Renderings der semantischen Informationen, d.h. Bilder mit entsprechend eindeutiger Farbgebung, der simulierten Blickwinkel erzeugt.

In einem weiteren Schritt 206 werden aus den zuvor erstellten simulierten Ansichten jeweils semantische Informationen gewonnen, die jeweils semantische Informationen der Bildinhalte der simulierten Ansichten darstellen. Diese semantische Information der simulierten Ansichten stellt die oben beschriebene zweite semantische Information dar. Für alle Blickwinkel werden Histogramme der zweiten semantischen Information generiert.

In einem letzten Schritt 207 des Trainingsverfahrens werden die zweiten semantischen Informationen, d.h. die Histogramme, der simulierten Ansichten zusammen mit jeweils zugehörenden Poseinformationen der simulierten Blickwinkel in einer Datenbank abgespeichert. Da die simulierten Ansichten basierend auf den Blickwinkelsimulationen erzeugt werden sind die jeweiligen zweiten Poseinformationen bekannt. Die Histogramme der zweiten semantischen Information werden jeweils über die zweiten Poseinformationen mit dem 3D-Modell verknüpft, sodass jeweils Paare von Histogrammen und entsprechender zweiter Poseinformation einer simulierten Ansicht abgespeichert wird.

Figur 4 zeigt eine schematische Darstellung eines Erkennungssystems 1 gemäß einem Ausführungsbeispiel der Erfindung. Das Erkennungssystem 1 eignet sich insbesondere dazu, mit dem Arbeitsverfahren gemäß Figur 2 betrieben zu werden und für ein Trainingsverfahren gemäß Figur 2 verwendet zu werden.

Das Erkennungssystem 1 besteht aus einem mobilen Aufnahmegerät 2, einem Server 3 und einem Datenspeicher 4. Datenspeicher 4, Server 3 und mobiles Aufnahmegerät 2 sind jeweils über ein Netzwerk 5 miteinander verbunden. Server 3 und Datenspeicher 4, in diesem Ausführungsbeispiel verbunden über das Netzwerk 5, bilden gemeinsam eine Datenverarbeitungsvorrichtung 21.

Das Aufnahmegerät 2 weist einen Farbsensor 6, beispielsweise als Teil einer RGB-Kamera, auf. Der Farbsensor 6 ist dazu eingerichtet, ein Farbbild eines Teils einer Bauteilanordnung aufzunehmen, in dem sich ein zu bestimmendes Bauteil befindet. Die Bauteilanordnung entspricht beispielsweise der Bauteilanordnung gemäß Figur 1. Die von dem mobilen Aufnahmegerät 2 aufgenommenen Farbbilder werden über das Netzwerk 5 an den Server 3 gesendet.

Der Server 3 weist einen Prozessor 7 und einen Arbeitsspeicher 8 auf. Prozessor 7 und Arbeitsspeicher 8 werden dazu verwendet, die von dem mobilen Aufnahmegerät 2 erhaltenen Farbbilder auszuwerten. Hierfür sind in einer Speichervorrichtung 9 des Servers 3 verschiedene Softwaremodule gespeichert. Benötigte Softwaremodule werden von dem Prozessor 7 in den Arbeitsspeicher 8 geladen.

Der Prozessor 7 ist dazu eingerichtet, aus der Speichervorrichtung 9 ein semantisches Segmentierungsmodul 10 aufzurufen. Das semantische Segmentierungsmodul 10 umfasst ein zuvor trainierten semantischen Segmentierungsalgorithmus, welcher dazu verwendet wird, das mit dem mobilen Aufnahmegerät 2 aufgenommene Farbbild semantisch zu segmentieren. Auf diese Weise kann jedem Pixel des Farbbildes eine Bauteilklasse der Bauteilanordnung zugeordnet werden.

Außerdem ist der Prozessor 7 dazu eingerichtet, ein Abgleichmodul 11 in den Arbeitsspeicher 8 zu laden. Das Abgleichmodul 11 ist dazu eingerichtet, eine erste semantische Information des aufgenommenen Farbbildes mit auf dem Datenspeicher 4 gespeicherten zweiten semantischen Informationen von simulierten Ansichten der Bauteilanordnung abzugleichen. Diese erste bzw. zweiten semantischen Informationen entsprechend den mit Bezug auf die Figuren 2 und 3 beschriebenen semantischen Informationen.

Das Abgleichmodul 11 ist dazu eingerichtet, unter den zweiten semantischen Informationen diejenige zweite semantische Information zu bestimmen, die die größte Ähnlichkeit zur ersten semantischen Information besitzt.

Zusammen mit den zweiten semantischen Informationen sind auf dem Datenspeicher 4 zu jeder zweiten semantischen Information eine zugehörende zweite Poseinformation gespeichert. Die zweiten Poseinformationen entsprechend den mit Bezug auf die Figuren 2 und 3 beschriebenen zweiten Poseinformationen.

Ein Positionierungsmodul 12 des Servers 3 ist dazu eingerichtet, die zweite Poseinformation, die zu der zweiten semantischen Information mit der größten Ähnlichkeit zur ersten semantischen Information gehört, in den Arbeitsspeicher 8 zu laden und diese zweite Poseinformation als erste Poseinformation des Aufnahmegeräts bezüglich der Bauteilanordnung zu bestimmen.

Auf der Speichervorrichtung 9 ist des Weiteren ein Rendermodul 13 gespeichert, das dazu eingerichtet ist, Teilansichten des 3D-Modells basierend auf der ersten Poseinformation zu rendern.

Ferner ist auf der Speichervorrichtung 9 ein Auswertungsmodul 14 gespeichert, das dazu eingerichtet ist, Bauteilinformationen von in den gerenderten Teilansichten dargestellten Bauteilen zu ermitteln. Die ermittelten Bauteilinformationen können von dem Server 3 über das Netzwerk 5 an das Aufnahmegerät 2 gesendet werden.

Das Aufnahmegerät 2 weist eine Anzeigevorrichtung 15 in Form eines Displays auf, die dazu eingerichtet ist, einem Benutzer die ausgewerteten Bauteilinformationen anzuzeigen.

In einem alternativen Ausführungsbeispiel des Erkennungssystems 1 ist der Datenspeicher in dem Server 3 integriert. In einem weiteren alternativen Ausführungsbeispiel des Erkennungssystem 1 sind Elemente des Servers 3 vollständig oder teilweise in dem mobilen Aufnahmegerät 2 integriert. In einem weiteren alternativen Ausführungsbeispiel sind Elemente des Servers 3 und des Datenspeichers 4 teilweise oder vollständig in dem mobilen Aufnahmegerät 2 integriert.

Das Aufnahmegerät 2 kann zusätzlich eine initiale Messeinheit 16 aufweisen, sodass sich das mobile Aufnahmegerät 2 auch für das mit Bezug auf Figur 3 beschriebenen Trainingsverfahren verwenden lässt.

Figur 5 zeigt eine schematische Darstellung eines Arbeitsverfahrens für ein Erkennungssystem und eines Trainingsverfahrens für ein Erkennungssystem zum Erzeugen eines 3D-Modells einer Bauteilanordnung mit Referenzdaten gemäß einem Ausführungsbeispiel der Erfindung. Auf oben, bezüglich der Figuren 1 bis 4 bereits ausführlich erläuterte Details wird an dieser Stelle nicht nochmals eingegangen sondern gelten ebenfalls für Figur 5.

In einem Schritt 500 des Trainingsverfahrens wird das 3D-Modell der Bauteilanordnung aufbereitet. In einem Schritt 501 werden mit einem Aufnahmegerät aufgenommene Trainingsbilder der Bauteilanordnung in dem 3D-Modell registriert. In einem Schritt 502 werden, basierend auf dem 3D-Modell semantische Labelmaps für die Trainingsbilder generiert. In einem Schritt 503 werden simulierte Ansichten der Bauteilanordnung entsprechend möglicher Blickwinkel erstellt. In einem Schritt 504 wird eine Datenbank 506 mit Histogrammen einer zweiten semantischen Information der simulierten Ansichten und zugehörenden zweiten Poseinformationen der simulierten Ansichten erstellt. In einem Schritt 505 wird ein semantischer Segmentierungsalgorithmus 507 basierend auf den Trainingsbildern und den Labelmaps trainiert.

In einem Schritt 508 des Arbeitsverfahrens wird ein Farbbild mit einem Aufnahmegerät aufgenommen. In einem Schritt 509 wird eine semantische Segmentierung des Farbbildes mittels dem semantischen Segmentierungsalgorithmus 507 durchgeführt, um eine erste semantische Information zu erhalten. In einem Schritt 510 wird die erste semantische Information mit den zweiten semantischen Informationen in der Datenbank 506 abgeglichen. In einem Schritt 511 wird eine Lokalisierung des Aufnahmegeräts basierend auf der zweiten Poseinformation der zweiten semantischen Information in der Datenbank 506, die der ersten semantischen Information am ähnlichsten ist, durchgeführt. In einem Schritt 512 werden Bauteilinformationen der Bauteile, die in dem Farbbild erfasst sind, ermittelt.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

## Patentansprüche

1. Arbeits- und Trainingsverfahren, das Arbeitsverfahren umfassend die Schritte:
- Aufnehmen (100) wenigstens eines Farbbildes eines ersten Teils einer Bauteilanordnung (17) mit einem Aufnahmegerät (2), wobei der erste Teil der Bauteilanordnung (17) wenigstens ein zu erkennendes Bauteil (18, 19, 20) umfasst;
- Bestimmen (101) einer ersten Information eines Bildinhalts des Farbbildes mittels eines trainierten semantischen Segmentierungsalgorithmus;
- Abgleichen (102) der ersten Information mit wenigstens einer gespeicherten zweiten Information eines Bildinhalts wenigstens einer simulierten Ansicht eines 3D-Modells der Bauteilanordnung (17);
- Bestimmen (104) einer ersten Poseinformation des Aufnahmegeräts (2) bezüglich des 3D-Modells basierend auf einer Auswertung einer gespeicherten zweiten Poseinformation der zweiten Information, welche eine größte Ähnlichkeit zu der ersten Information aufweist;
- Ermitteln (105) wenigstens einer Bauteilinformation des wenigstens einen zu erkennenden Bauteils (18, 19, 20) basierend auf der bestimmten ersten Poseinformation,
**dadurch gekennzeichnet, dass** die erste Information und die zweite Information semantische Informationen sind, wobei die erste semantische Information jedem Pixel des Farbbildes und die zweite semantische Information jedem Pixel der simulierten Ansicht des 3D-Modells eine von mehreren semantischen Klassen zuordnet und, dass das Trainingsverfahren zum Erzeugen des 3D-Modells der Bauteilanordnung (17) mit den zweiten semantischen Informationen und den zweiten Poseinformationen für das Arbeitsverfahren die folgenden Schritte umfasst:
- Aufnehmen wenigstens eines Trainingsbildes wenigstens eines dritten Teils der Bauteilanordnung (17);
- Erfassen einer Aufnahmeposition für jedes aufgenommene Trainingsbild;
- Registrieren des wenigstens einen Trainingsbildes in dem 3D-Modell basierend auf der entsprechenden erfassten Aufnahmeposition;
- Erstellen einer semantischen Labelmap für jedes aufgenommene Trainingsbild, wobei für jeden Pixel des wenigstens einen Trainingsbilds definiert wird, zu welcher Bauteilklasse ein Bauteil der Bauteilanordnung gehört, welches diesen Pixel umfasst, wobei die semantische Labelmap für jedes aufgenommene Trainingsbild basierend auf Daten des 3D-Modells mittels Rendering von Ansichten des 3D-Modells entsprechend den aufgenommenen Trainingsbildern erzeugt wird;
- Trainieren des semantischen Segmentierungsalgorithmus basierend auf dem wenigstens einen Trainingsbild und der entsprechenden wenigstens einen semantischen Labelmap;
- Erstellen wenigstens einer simulierten Ansicht wenigstens eines zweiten Teils der Bauteilanordnung (17);
- Speichern der zweiten semantischen Information der wenigstens einen simulierten Ansicht zusammen mit der zugehörenden zweiten Poseinformation bezüglich dem 3D-Modell.

2. Arbeits- und Trainingsverfahren gemäß Anspruch 1,
wobei die semantischen Klassen Bauteilklassen des 3D-Modells der Bauteilanordnung (17) zugeordnet sind.

3. Arbeits- und Trainingsverfahren gemäß Anspruch 2,
wobei die erste bzw. zweite semantische Information jeweils ein Histogramm der in dem Farbbild bzw. in der simulierten Ansicht enthaltenen Bauteilklassen darstellt.

4. Arbeits- und Trainingsverfahren gemäß einem der Ansprüche 1 bis 3, wobei der Schritt des Ermittelns (105) der wenigstens einen Bauteilinformation die folgenden weiteren Schritte umfasst:
- Rendern eines Bildausschnitts des 3D-Modells basierend auf der ersten Poseinformation; und
- Anzeigen des gerenderten Bildausschnitts auf einer Anzeigevorrichtung (15) zusammen mit der wenigstens einen Bauteilinformation des wenigstens einen zu erkennenden Bauteils (18, 19, 20).

5. Arbeits- und Trainingsverfahren gemäß einem der Ansprüche 1 bis 4,
wobei die Bauteilanordnung (17) Teil eines Schienenfahrzeugs ist.

6. Arbeits- und Trainingsverfahren gemäß einem der Ansprüche 1 bis 5, wobei die Bauteilanordnung (17) Teil eines Schienenfahrzeugs ist.

## Claims

1. Working and training method, the working method comprising the steps of:
- receiving (100), with a receiving device (2), at least one colour image of a first part of a component arrangement (17), wherein the first part of the component arrangement (17) comprises at least one component to be identified (18, 19, 20);
- ascertaining (101), by means of a trained semantic segmentation algorithm, a first item of information of an image content of the colour image;
- aligning (102) the first item of information with at least one stored second item of information of an image content of at least one simulated view of a 3D model of the component arrangement (17);
- ascertaining (104) a first item of pose information of the receiving device (2) in respect of the 3D model based on an evaluation of a stored second item of pose information of the second item of information, which shares the greatest similarity with the first item of information;
- determining (105) at least one item of component information of the at least one component (18, 19, 20) to be identified based on the ascertained first item of pose information, **characterised in that** the first item of information and the second item of information are items of semantic information, wherein the first item of semantic information assigns one of a plurality of semantic classes to each pixel of the colour image and the second item of semantic information assigns one of a plurality of semantic classes to each pixel of the simulated view, and the training method for generating the 3D model of the component arrangement (17) with the second items of semantic information and the second items of pose information for the working method comprises the following steps:
- receiving at least one training image of at least one third part of the component arrangement (17);
- detecting a receiving position for each training image received;
- registering the at least one training image in the 3D model based on the corresponding detected receiving position;
- creating a semantic label map for each training image received, wherein it is defined for each pixel of the at least one training image, to which component class a component of the component arrangement belongs, which comprises this pixel, wherein the semantic label map is generated for each training image received based on data of the 3D model by means of rendering views of the 3D model according to the training images received;
- training the semantic segmentation algorithm based on the at least one training image and the corresponding at least one semantic label map;
- creating at least one simulated view of at least one part of the component arrangement (17);
- storing the second item of semantic information of the at least one simulated view together with the associated second item of pose information in respect of the 3D model.

2. Working and training method according to claim 1, wherein the semantic classes are assigned to component classes of the 3D model of the component arrangement (17).

3. Working and training method according to claim 2, wherein the first or second item of semantic information represents, in each case, a histogram of the component classes contained in the colour image or in the simulated view.

4. Working and training method according to one of claims 1 to 3, wherein the step of determining (105) the at least one item of component information comprises the following additional steps:
- rendering an image section of the 3D model based on the first item of pose information; and
- displaying the rendered image section on a display apparatus (15) together with the at least one item of component information of the at least one component (18, 19, 20) to be identified.

5. Working and training method according to one of claims 1 to 4,
wherein the component arrangement (17) is part of a rail vehicle.

6. Working and training method according to one of claims 1 to 5, wherein the component arrangement (17) is part of a rail vehicle.

## Revendications

1. Procédé de travail et d'apprentissage, le procédé de travail comprenant les stades :
- réception (100) d'au moins une image en couleur d'une première partie d'un agencement (17) de pièce par un appareil (2) d'enregistrement, dans lequel la première partie de l'agencement (17) de pièce comprend au moins une pièce (18, 19, 20) à identifier ;
- détermination (101) d'une première information d'un contenu de l'image en couleur, au moyen d'un algorithme de segmentation sémantique ayant subi un apprentissage ;
- alignement (102) de la première information sur au moins une deuxième information mise en mémoire d'un contenu d'image d'au moins une vue simulée d'un modèle en 3D de l'agencement (17) de pièce ;
- détermination (104) d'une première information de pose de l'appareil (2) d'enregistrement se rapportant au modèle en 3D sur la base d'une évaluation d'une deuxième information de pose mise en mémoire de la deuxième information, qui présente la plus grande similarité avec la première information ;
- détermination (105) d'au moins une information de pièce de la au moins une pièce (18, 19, 20) à identifier sur la base de la première information de pose déterminée,
**caractérisé en ce que** la première information et la deuxième information sont des informations sémantiques, dans lequel la première information sémantique affecte à chaque pixel de l'image en couleur et la deuxième information sémantique à chaque pixel de la vue simulée du modèle en 3D, l'une de plusieurs classes sémantiques et **en ce que** le procédé d'apprentissage pour la . production du modèle en 3D de l'agencement (17) de pièce par les deuxièmes informations sémantiques et les deuxièmes informations de pose pour le procédé de travail comprend les stades suivants :
- réception d'au moins une image d'apprentissage d'au moins une troisième partie de l'agencement (17) de pièce ;
- détection d'une position d'enregistrement pour chaque image d'apprentissage enregistrée ;
- enregistrement de la au moins une image d'apprentissage dans le modèle en 3D sur la base de la position d'enregistrement détectée correspondante ;
- établissement d'une carte d'étiquettes sémantiques pour chaque image d'apprentissage enregistrée, dans lequel pour chaque pixel de la au moins une image d'apprentissage, il est défini la classe de pièce à laquelle une pièce de l'agencement de pièces appartient, laquelle comprend ce pixel, dans lequel la carte d'étiquettes sémantiques pour chaque image d'apprentissage enregistrée, est produite conformément aux images d'apprentissage enregistrées, sur la base des données du modèle en 3D, au moyen d'un rendu de vue du modèle en 3D ;
- apprentissage de l'algorithme de segmentation sémantique sur la base de la au moins une image d'apprentissage et de la au moins une carte d'étiquettes sémantiques correspondante ;
- établissement d'au moins une vue simulée, d'au moins une deuxième partie de l'agencement (17) de pièce ;
- mise en mémoire de la deuxième information sémantique de la au moins une vue simulée ensemble avec la deuxième information de pose lui appartenant concernant le modèle en 3D.

2. Procédé de travail et d'apprentissage suivant la revendication 1,
dans lequel les classes sémantiques sont affectées à des classes de pièce du modèle en 3D de l'agencement (17) de pièce.

3. Procédé de travail et d'apprentissage suivant la revendication 2,
dans lequel la première information sémantique et respectivement la deuxième information sémantique représentent respectivement un histogramme des classes de pièce contenues dans l'image en couleur et respectivement dans la vue simulée.

4. Procédé de travail et d'apprentissage suivant l'une des revendications 1 à 3,
dans lequel le stade de détermination (105) de la au moins une information de pièce comprend les stades supplémentaires suivants :
- rendu d'un extrait d'image du modèle en 3D sur la base de la première information de pose ; et
- affichage de l'extrait d'image rendu sur un dispositif (15) d'affichage ensemble avec au moins une information de pièce de la au moins une pièce (18, 19, 20) à identifier.

5. Procédé de travail et d'apprentissage suivant l'une des revendications 1 à 4,
dans lequel l'agencement (17) de pièce fait partie d'un véhicule ferroviaire.

6. Procédé de travail et d'apprentissage suivant l'une des revendications 1 à 5,
dans lequel l'agencement (17) de pièce fait partie d'un véhicule ferroviaire. .
